# EUROPEAN PATENT APPLICATION

(11) **EP 4 414 229 A1**
(43) Date of publication of application: **14.08.2024**
(21) Application number: 23156211.7
(22) Date of filing: 13.02.2023
(51) Int. Cl.: B60T 17/00, F01N 1/24

(54) **NOISE ABSORBER CHAMBER DEVICE, PNEUMATIC BRAKE SILENCER ASSEMBLY AND VEHICLE**

(71) Applicant: KNORR-BREMSE Systeme für Nutzfahrzeuge GmbH, 80809 München (DE)
(72) Inventor: SOMODI, Richard, 6034 Helvécia (HU); LÖRINCZI, Otto Botond, 1038 Budapest (HU); TOTH, Tamas, 6000 Kecskemet (HU); COMPERA, Yves, 85748 Garching bei München (DE); SOVAGO, Szabolcs, 6000 Kecskemét (HU); TANCZOS, Miklos, 6000 Kecskemet (HU); FEKETE, Marton, 1173 Budapest (HU)

(57) **Abstract**

The present invention relates to a noise absorber chamber device (4, 4') for a pneumatic brake silencer assembly (10, 10') for a vehicle, comprising:
a noise absorber chamber device inlet (41, 41') configured to receive a pressurized pneumatic flow;
a noise absorber chamber device outlet (42, 42') configured to release the pneumatic flow after passing the noise absorber chamber device (4, 4') from the noise absorber chamber device inlet (41, 41 ') to the noise absorber chamber device outlet (42, 42'); and
a noise absorber chamber device lateral wall (4a, 4a') extending from the noise absorber chamber device inlet (41, 41') to the noise absorber chamber device outlet (42, 42') to form a noise absorption chamber between the noise absorber chamber device inlet (41, 41') and the noise absorber chamber device outlet (42, 42').

## Description

The present invention relates to a noise absorber chamber device for a pneumatic brake silencer assembly for a vehicle, a pneumatic brake assembly for a vehicle, and a vehicle.

Vehicles with a pneumatic brake system emit noise, which has to be restricted to comply with noise emission requirements. For example, vehicles, such as commercial vehicles with a pneumatic brake system may have to comply with the noise requirement, for example according to ECE R51.03 valid as of January 20, 2016. According to the referenced ECE R51.03, Annex 6, the valve assembly should fulfill the requirement of a maximum of 72 dB(A) at 7 m.

The above requirement may be fulfilled by a mainstream silencer as, for example, disclosed in WO 2019/063350 A1. However, at an electric commercial vehicle with pneumatic brakes, this noise value may be still too high.

It is an object of the present invention to further reduce the noise emitted by a pneumatic brake silencer assembly.

The object is solved by the subject matter of the independent claims. Further aspects of the present invention are subject to the dependent claims.

According to the present invention, a noise absorber chamber device for a pneumatic brake silencer assembly for a vehicle comprises a noise absorber chamber device inlet configured to receive a pressurized pneumatic flow, a noise absorber chamber device outlet configured to release the pneumatic flow after passing the noise absorber chamber device from the noise absorber chamber device inlet to the noise absorber chamber device outlet, and a noise absorber chamber device lateral wall extending from the noise absorber chamber device inlet to the noise absorber chamber device outlet to form a noise absorption chamber between the noise absorber chamber device inlet and the noise absorber chamber device outlet.

For example, in commercial vehicles the pressure, the flow velocity and the characteristic noise frequency are much higher compared to other applications, which may require noise reduction. Further, silencers of commercial vehicles with pneumatic systems are always at an endpoint, releasing air to the environment. Additionally, any obstruction at an outlet side creates additional noise.

In view of the above, the noise absorber chamber device decreases the noise generated by the mixing of high velocity flow with ambient air without significantly disturbing the flow itself by the absorption of noise energy and directing the noise. The geometry of the absorber is designed in a way such that the pneumatic flow and the mixing process of air is only disturbed to a minimal extent. Specifically, the noise absorber chamber device lateral wall forms a flow duct from the noise absorber chamber device inlet to the noise absorber chamber device outlet, in which noise can be absorbed. The duct formed by the noise absorber chamber lateral wall substantially straight, i.e. does not provide any deflections of the flow therethrough by being bent to extend in a deflecting direction. In other words, the duct extends substantially along a longitudinal axis extending as a straight line in a direction from the noise absorber chamber device inlet to the noise absorber chamber device outlet. For example, the noise absorber chamber device lateral wall extends rotationally symmetric around such longitudinal axis.

Preferably, the noise absorber chamber device is part of a pneumatic brake silencer assembly comprising a silencer, as described later. In such pneumatic brake silencer assembly, the noise absorber chamber device may be positioned downstream of the silencer with respect to the flow direction. In such configuration, the noise absorber chamber device further reduces the noise, such that the noise emission may be equal to or less than 68 dB(A), preferably equal to or less than 60 dB(A) within 7 m distance from a vehicle comprising the noise absorber chamber device or pneumatic brake silencer assembly, respectively.

The noise absorber chamber device may be used on any silencer as an extension, since the working principle is independent from the type of silencer.

In principle, the silencer relates to a structure with a noise-reducing material, such as a mesh, through which a compressed or pressurized air flow passes. An example of such silencer is disclosed in WO 2019/063350 A1. In turn, the noise absorber chamber device relates to a duct as previously described and which may provide further features as addressed below. In other words, the silencer and the noise absorber chamber are both intended to reduce noise. The noise absorber chamber is an attachment, in particular a downstream attachment with respect to the pressurized pneumatic flow, to allow further noise reduction compared to a standalone silencer. Accordingly, the noise absorber chamber is intended to absorb most of the remaining noise exiting the silencer. The noise absorber chamber may be a separate part to be assembled directly or indirectly to an outlet of the silencer or may be integrally formed with the silencer.

In some embodiments, an inner surface of the noise absorber chamber device lateral wall at least partially extends from the noise absorber chamber device inlet to the noise absorber chamber device outlet with an opening angle of 0° to 60°, preferably 20° to 40°, more preferably substantially 25°.

With respect to the aspect of avoiding to disturb the pneumatic flow and mixing process of air, the opening angle of the noise absorber chamber device lateral wall is at least 0° to avoid a tapering of the duct formed by the noise absorber chamber device lateral wall from the noise absorber chamber device inlet to the noise absorber chamber device outlet. However, to allow the duct to be effective, the opening angle may not more than 60°. With an opening angle of 20° to 40°, more preferably substantially 25°, the noise absorber chamber device may effectively absorb noise without generating additional drag noise due to the turbulence of the disturbed flow.

In some embodiments, a noise absorber chamber inlet diameter of the noise absorber chamber device inlet is between 40 mm and 250 mm, preferably between 50 mm and 200 mm, more preferably about 70 mm.

The noise absorber chamber inlet diameter of the noise absorber chamber device inlet may correspond to an outlet diameter of a silencer outlet to which the noise absorber chamber device inlet is operatively connected to. In principle, the noise absorber chamber inlet diameter may be about one time to three times a state of the art silencer outlet diameter. Accordingly, the silencer intended to be combined with the noise absorber chamber device may be subject to be designed with a respective silence outlet diameter. Alternatively or in addition, the noise absorber chamber device may be attached to the silencer by an adapter or any other intermediate attachment means. Specifically, the noise absorber chamber inlet diameter may be between 40 mm and 250 mm, for example between 60 mm and 150 mm, depending on the silencer diameter provided for an attachment of the noise absorber chamber device.

In some embodiments, the length of the noise absorber chamber device lateral wall is substantially between one to four times the noise absorber chamber inlet diameter of the noise absorber chamber device inlet, preferably the noise absorber chamber inlet diameter of the noise absorber chamber device inlet as previously described, more preferably between 50 mm and 400 mm.

The length of the noise absorber chamber device lateral wall refers to the distance between the noise absorber chamber device inlet and the noise absorber chamber device outlet or the length of the duct formed by the noise absorber device lateral wall, respectively. The longer the length of the noise absorber chamber device lateral wall, the longer the pneumatic flow therethrough. Accordingly, the longer the length of the noise absorber chamber device lateral wall, the more effective. However, from a package point of view, the length of the noise absorber chamber device lateral wall may have to be restricted to a length still being at least sufficiently effective.

In principle, the length of the noise absorber chamber device lateral wall may be one time to six times a state of the art silencer outlet diameter, for example between 50 mm and 400 mm.

In some embodiments, an inner surface of the noise absorber chamber device lateral wall is at least partially provided by a noise absorbing material, preferably a fibrous or foam material.

The noise absorber chamber device lateral wall may be at least partially constituted of or at least partially comprises a noise absorbing material to at least partially form the inner surface of the noise absorber chamber device lateral wall. The noise absorber chamber lateral wall may comprise a noise absorbing material as being covered by the noise absorbing material on a side facing the interior of the noise absorber chamber device. Preferably, the entire inner surface of the noise absorber chamber device provides the noise absorbing material.

The noise absorbing material may be a fibrous material or a foam. However, other noise absorbing material structures may be applied alternatively or in addition.

In some embodiments, the thickness of the noise absorbing material is at least one tenth of the characteristic noise wavelength.

The thicker the noise absorbing material, the more effective the noise absorption. The thickness refers to extension of the noise absorbing material perpendicular to the inner surface of the noise absorber chamber device lateral wall.

In some embodiments, the thickness of the noise absorbing material is between 1 mm and 25 mm, preferably between 3 mm and 20 mm.

As already addressed above, the noise absorption capability may increase with the thickness of the noise absorbing material. However, the thickness may have to be limited to consider installation space or weight, while still providing sufficient noise reduction. In other words, an arbitrary increase in thickness may result in significant structural disadvantages, while only providing an insignificant increase in effectivity.

In some embodiments, the inner surface of the noise absorber chamber device lateral wall at least partially comprises noise scattering surface features.

Due to noise scattering features, the incident noise waves are allowed to be dispersed into several reflected waves with a lower level of noise and/or to be diffused. The inner surface of the noise absorber chamber device may therefore at least partially comprise a regular or irregular pattern of noise scattering surface features. A regular pattern may be provided by a defined surface structure, for example, by convex surface features as noise scattering surface features provided in a regular pattern. An irregular pattern may be provided by defined surface structures provided in an irregular or random pattern, or undefined surface structures. Such undefined structures may be, for example, a comparably rough surface configured to diffuse an incident wave in multiple directions with low amplitude. In contrast, a specular reflection reflects the incident wave in one direction.

In some embodiments, the noise absorber chamber device lateral wall is solid with a high reflection ratio and provides high rigidity.

The noise absorber chamber device lateral wall drives the generated noise relative to the pneumatic flow, and functions as a barrier on the sides as apparent from the fundamental configuration of the noise absorber chamber device. Since the acoustic reflection depends on the mass and the reflection ratio of the inner surface of the noise absorber chamber device lateral wall, the noise absorber chamber device lateral wall being solid with a high reflection ratio and providing high rigidity, effectivity on noise reduction is allowed to be increased.

For example, the noise absorber chamber device lateral wall may be made or at least comprise industrial plastic materials, an aluminum alloy or other metal alloys. The noise absorber chamber device lateral wall may be solid without any perforations or the like at a region of the absorbing material. The noise absorber chamber device lateral wall may be configured to mainly, preferably entirely, absorb noise by the absorbing material, while parts of the noise absorber chamber device lateral wall not providing the absorbing material are mainly intended for reflection.

In some embodiments, the noise absorber chamber device outlet is formed by a plurality of outlet channels.

Accordingly, the noise absorber chamber device outlet is not one large opening but provided by the plurality of outlet channels. With respect to the noise absorber chamber device outlet being formed as one large opening, the noise regeneration downstream of the noise absorber chamber device outlet with respect to the pneumatic flow, e.g. outside the noise absorber chamber device, is minimized, since the flow is not obstructed. However, according to the alternative embodiment with the noise absorber chamber device outlet being formed by a plurality of outlet channels, the inside of the noise absorber chamber device may be at least partially protected from water and dirt. Further, the structure forming the plurality of outlet channels allows noise to be reflected back into the noise absorber chamber device to increase absorption by a noise trap effect. Even though the configuration of the noise absorber chamber device outlet being formed by a plurality of outlet channels may disturb the pneumatic flow at the noise absorber chamber device outlet such that additional drag and mixing noise may be generated, the advantages of protection and back reflections allow a further improvement.

Preferably, the plurality of outlet channels extends over the entire noise absorber chamber device outlet. In other words, the noise absorber chamber device outlet is not substantially narrowed by the structure providing the plurality of outlet channels but structured or patterned by the plurality of outlet channels. The structure forming the plurality of outlet channels may form a regular pattern of outlet channels. Preferably, the width of structural portions of the structure extending in a direction perpendicular to the pneumatic flow or the distance between adjacent outlet channels, respectively, is between 5 mm and 20 mm. Preferably, the outlet channels provide a width in a direction perpendicular to the pneumatic flow is between 5 mm and 30 mm.

The effective flow area of the noise absorber chamber device outlet may be not less than the silencer outlet area, where the noise absorber chamber device is attached. The ratio of the effective flow area to release the pressurized pneumatic flow to the total noise absorber chamber device outlet area may be between 0.5 and 1. A ratio of 1 corresponds to a noise absorber chamber device outlet without a plurality of outlet channels, i.e. a noise absorber chamber device outlet as one continuous outlet opening.

The pattern of outlet channels may be created from any shape, auch as hexagons as described later, circles, triangles or the like. The characteristic dimensions of the shapes, i.e. the side length, diameters and the like, may be between 5 mm and 30 mm, preferably not more than 20 mm. A reflection ring may be created by the structure of outlet channels around the flow area. A reflection center may be created in the center of the ring shaped outflow area. Such reflection area may be a closed structure in the center of the noise absorber chamber device outlet surrounded by the plurality of outlet channels.

In some embodiments, at least some of the outlet channels are extending in a hexagonal shape.

Accordingly, the hexagonal structure of the outlet channels or the hexagonal openings provided by the outlet channels, respectively, allow a stiff structure forming the plurality of outlet channels. The comparably stiff structure allows the material between the outlet openings to be reduced to decrease the disturbance effect on the flow.

In some embodiments, at least some of the outlet channels are extending tapered from an outlet channel opening facing the noise absorber chamber to an outlet channel opening facing away from the noise absorber chamber.

A pneumatic flow passing the outlet channels may thereby be further reflected to keep noise at least partially within the noise absorber chamber device and/or to further absorb some noise.

In another aspect, the present invention relates to a pneumatic brake silencer assembly for a vehicle, comprising at least one silencer with a silencer outlet configured to release a pressurized pneumatic flow, and at least one noise absorber chamber device as previously described. The silencer outlet is operatively connected to the noise absorber chamber device inlet of the noise absorber chamber device.

The at least one silencer for the pneumatic brake silencer assembly for a vehicle may comprise a silencer inlet configured to receive a pressurized pneumatic flow, a silencer outlet configured to release the pneumatic flow after passing the silencer from the silencer inlet to the silencer outlet, a basket extending from the silencer inlet to the silencer outlet, and a knitted mesh received in the basket. The silencer further may comprise a wire mesh received in the basket and arranged between the knitted mesh and the silencer outlet.

The wire mesh may thereby provide a concrete predetermined design in a stable manner to reduce the number of different and random angles by the wire surfaces compared to the flow direction of the pressurized pneumatic flow from the silencer inlet to the silencer outlet. In other words, the wire mesh may provide a more homogeneous structure than the knitted mesh. For example, the wire mesh may provide a wire with a substantially regular, for example, circular cross-sectional shape for a smaller separation, which is a "wake" after the dead zone of the wire, from the wire, which reduces the created noise. The term substantially regular refers to deviations from a regular cross-sectional shape that may result from manufacturing tolerances and the like without significantly affect the intended homogeneous structure. The wire mesh further may be understood as at least one layer of a grid structure with the openings formed between the wires arranged in a plane inclined to the flow direction of the pressurized pneumatic flow from the silencer inlet to the silencer outlet, preferably substantially perpendicular to the flow direction of the pressurized pneumatic flow. The term substantially relates to the fact that the pressurized pneumatic flow may become partially deflected by the knitted mesh to some extent but still provides a main flow direction from the silencer inlet to the silencer outlet. The wire mesh may also comprise or be formed by more than one layer of a grid structure.

Accordingly, the use of the wire mesh in combination with the knitted mesh, such as a conventional knitted mesh as previously described, allows to create a homogeneous structure at the silencer outlet or shortly before the silencer outlet respectively with respect to the flow direction of the pressurized pneumatic flow. Accordingly, the scale of turbulence or the intensity of the turbulence, respectively, can be decreased to improve the acoustic performance of the silencer, specifically in terms of noise reduction. Preferably, the silencer allows to reduce the noise at the silencer outlet, such that the noise emission may be equal to or less than 68 dB(A), preferably equal to or less than 60 dB(A) within 7 m distance from a vehicle comprising the silencer.

In some embodiments, the wire mesh has a comparable pore size as the knitted mesh.

The comparable pore size relates to a pore size of the wire mesh not more than double of the pore sized of the knitted mesh. Particularly, the pore size of the wire mesh may be between 20 % and 150 % of the pore size of the knitted mesh, preferably 70 % to 130 %, more preferably 90 % to 110 %.

In some embodiments, the pore size of the wire mesh is substantially between 0.1 mm and 3.5 mm, preferably substantially between 0.2 mm and 3 mm.

Even though the noise reduction may be more effective by a denser structure or reduced pore size, the wire mesh should still provide a minimum pore to reduce the risk of clogging or freezing.

In some embodiments, the wire mesh is a woven, braided, knitted, non-woven and/or random structure.

A woven, braided and/or knitted structure allows to provide a generally homogeneous wire mesh. A non-woven and/or random structure may be less homogeneous but may also be suitable by providing sufficient small cross sections between 0.01 mm and 0.5 mm or equal cross section areas, for example, in the event of non-circular shaped fibers. The non-woven or random structure may be provided by felts or cellulose or natural fiber sheets. The selection of the respective type of structure allows to affect cost aspects, applicable production technologies, materials for the wire mesh and/or environmental aspects.

In some embodiments, a wire of the wire mesh has a wire diameter of substantially 0.05 mm to 1.5 mm, preferably 0.1 mm to 1 mm.

Smaller wire diameters may allow to form denser wire mesh. Further, a smaller diameter may allow less disturbance of the pressurized pneumatic flow. However, the diameter selection may also affect costs, manufacturing technologies and applicable materials.

In some embodiments, the wire of the wire mesh is made from plastic, steel, aluminum or natural fibers.

The material selection may depend on cost aspects, the production technology and/or the required noise absorbing characteristics achievable.

In some embodiments, the wire mesh provides a rectangular or hexagonal mesh structure.

The rectangular, in particular the hexagonal structure provides comparably stiff structures to protect the wire mesh against deformations. In principle, the mesh structure may be at least configured to hold the knitted mesh and the wire mesh inside the basket, for example, to avoid the knitted mesh and wire mesh being pushed out by the pressurized pneumatic flow.

In some embodiments, the silencer comprises an outlet structure positioned at the silencer outlet and configured to provide outlet openings, preferably in a honeycomb structure, more preferably as a set of hexagonal outlet openings.

Accordingly, the outlet structure is formed in or as the silencer outlet or positioned between the wire mesh and the silencer outlet. The outlet structure may thereby be used as holding or supporting structure for the wire mesh. Since the pressurized pneumatic flow is released from the silencer outlet after passing of the silencer, the outlet structure provides outlet openings to allow such release.

Preferably, the outlet structure provides outlet openings greater than the pore size of the wire mesh to reduce further disturbances of the pressurized pneumatic flow which has passed the wire mesh. A honeycomb structure, in particular a hexagonal structure of the outlet openings, i.e. the respective shape of the outlet openings in a plane of the outlet structure extending across the silencer outlet, allows a stiff design. Accordingly, by a comparably stiff structural design, the outlet openings may be allowed to be increased while the structure to form the outlet openings, i.e. the material between the outlet openings, may be decreased in dimensions. The outlet structure may provide a regular pattern of outlet openings with respect to the shape, size and/or arrangement of the outlet openings.

In some embodiments, the basket comprises at least one lateral opening extending laterally in a direction from the silencer inlet to the silencer outlet, preferably arranged in an area of the basket internally covered by the knitted mesh and/or the wire mesh.

Assuming that the silencer provides a cylindrical design with the cylinder axis, i.e. the symmetry axis of the cylinder surface, representative of the main direction of the pressurized pneumatic flow from the silencer inlet to the silencer outlet. In such exemplary configuration, the lateral openings forming a radial channel with respect to the cylinder axis. Accordingly, the term extending laterally refers to the lateral opening cross-section not to the extension of the channel formed by the lateral opening.

The at least one lateral opening is particularly arranged at a silencer outlet side to increase the outlet area. To avoid the release of unattenuated noise, the at least one lateral opening is arranged in an area, which is passed by the pressurized pneumatic flow after passing at least partially the knitted mesh, preferably the knitted mesh and the wire mesh.

In some embodiments, manufacturing of the silencer comprises the wire mesh being formed as an integral part of the basket.

By the wire mesh forming a part of the basket, the basket already provides the wire mesh. This may ease manufacturing or assembling the silencer.

In some embodiments, the wire mesh is molded as part of the basket.

Molding the wire mesh together with molding the basket, i.e. molding the basket with the wire mesh, is an example of the wire mesh being formed as an integral part of the basket. Here, for example, the wire mesh may be formed in one plane with the optional outlet structure, such as by forming a smaller secondary grid pattern as wire mesh within a greater primary grid pattern as outlet structure. However, the wire mesh may also be formed upstream of the outlet structure with respect to a later main flow direction of the pressurized pneumatic flow, i.e. between the silencer inlet and the outlet structure, preferably adjacent to the outlet structure.

In some embodiments, the wire mesh is formed as a separate part to be assembled to the basket.

By the use of the wire mesh as separate part to be assembled to the basket, the material of the wire mesh may be selected independently and therefore differently from the material of the basket. Furthermore, any variations in pore sizes of the wire mesh may be easily implemented without the need to adapt the basket manufacturing procedure, specifically the requirement of other molds with respect to the previous molding of the wire mesh integral with the basket. Further, a strict constraint between the basket and the wire mesh may not be required.

The wire mesh may be assembled to the basket or within the basket, respectively, by a receiving nut provided in the inner surface of the basket such as a circumferential nut, in which the wire mesh may be snapped-in. Since the wire mesh is an independent part of the silencer assembled to the basket, the wire mesh may be easily exchanged.

In some embodiments, the wire mesh is assembled by being received within the basket and positioned in at least one direction by a holding structure, preferably the outlet structure as previously described.

Accordingly, the wire mesh may be inserted from the silencer inlet side to rest on the holding structure. The wire mesh may then be maintained in the position resting on the holding structure by inserting the knitted mesh from the silencer outlet side to be positioned on the wire mesh.

In some embodiments, the wire mesh is assembled by being over-molded with the basket.

Similar to the above, the wire mesh as independent part, which thereby may be provided from a different material than the basket, may be positioned in the basket to be affixed thereto by being at least partially over-molded. The over-molding may be provided only at discrete portions to affix the wire mesh to the basket or the entire wire mesh may be over-molded. The over-molding of the wire mesh may also provide the ability to at least partially affect to wire mesh properties with respect to noise absorption and/or reflection. Further, with respect to a partial or entire over-molding of the wire mesh, the over-molding of the wire mesh may be a molding step to form the basket affixed to the wire mesh.

Any feature representative of a method or any method feature described with respect to the silencer is also applicable to the method. In turn, any feature representative of a device or any device feature described for the method is also applicable to the silencer.

Any feature described with respect to the noise absorber chamber device is also applicable to the pneumatic brake silencer assembly. In turn, any feature described for the pneumatic brake silencer assembly is also applicable to the noise absorber chamber device.

In some embodiments, the at least one noise absorber chamber device is a separate part to be assembled directly or indirectly to the silencer outlet or is integrally formed with the at least one silencer.

In accordance with the noise absorber chamber device integrally formed with the silencer, the noise absorber chamber forms an extension of the silencer on a downstream side with respect to the pressurized pneumatic flow direction.

In another aspect, the present invention relates to a vehicle comprising at least one noise absorber chamber device as previously described and/or pneumatic brake silencer assembly as previously described, wherein the vehicle is a commercial vehicle and/or an electrically powered or hybrid vehicle.

For example, the commercial vehicle may be a truck, a trailer, a bus and/or a combination of a towing vehicle and a trailer. Commercial vehicles and electrically powered or hybrid vehicles provide severe installation space constraints, which benefit from the previously described noise absorber chamber device and/or pneumatic brake silencer assembly. Specifically, the vehicle may be an electric commercial vehicle with a pneumatic brake system subject to low noise requirements.

Further advantages, aspects and details of the invention are subject to the claims, the following description of exemplary embodiments applying the principles of the invention, and the respective exemplary drawings.
**Figure 1** is a schematic cross-sectional view of a pneumatic brake silencer assembly 10 according to a first exemplary embodiment;
**Figure 2** is an enlarged view of an absorber layer section according to Fig. 1 as indicated by the circle A.
**Figure 3** is a schematic cross-sectional view of a pneumatic brake silencer assembly 10' according to a second exemplary embodiment;
**Figure 4** is a schematic cross-sectional view of a first exemplary silencer according to the exemplary embodiments of the pneumatic brake silencer assembly as per Figs. 1 to 3;
**Figure 5** is a schematic top view of the silencer according to Fig. 4 without a knitted mesh shown; and
**Figure 6** is a schematic cross-sectional view of a second exemplary silencer applicable to the exemplary embodiments of the pneumatic brake silencer assembly as per Figs. 1 to 3.

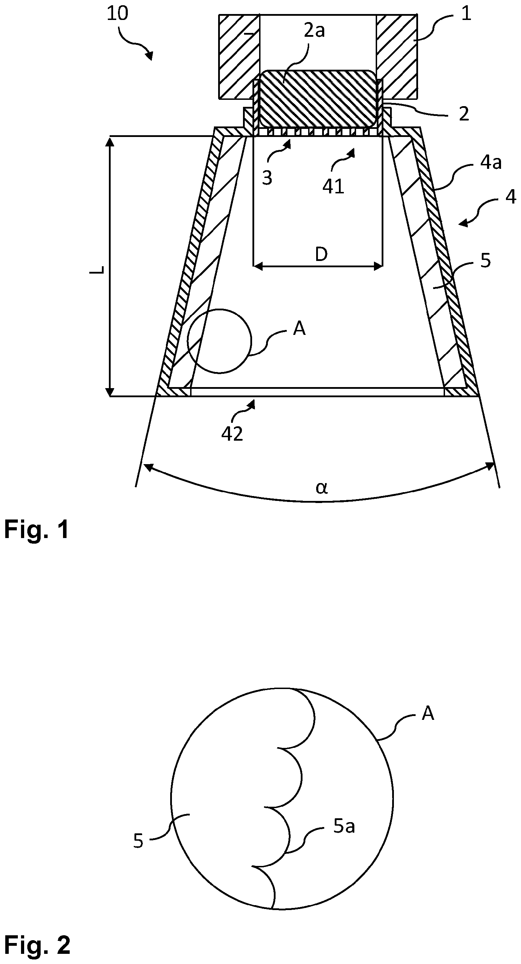

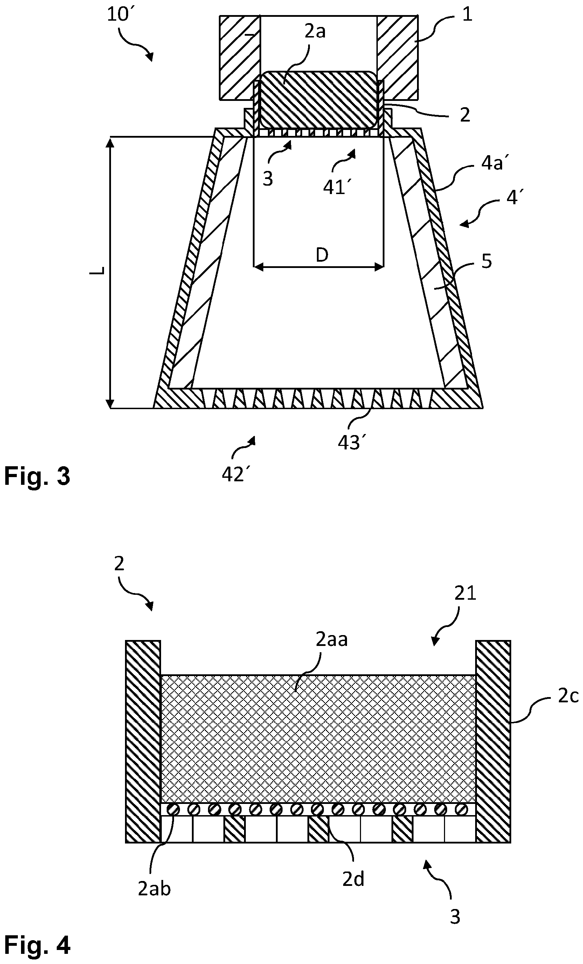

**Figure 1** shows a schematic cross-sectional view of a pneumatic brake silencer assembly 10 according to a first exemplary embodiment. The pneumatic brake silencer assembly 10 comprises a silencer 2 and a noise absorber chamber device 4. The silencer 2 is configured to be passed by a pressurized pneumatic flow from a silencer inlet 21 (Fig. 3) to a silencer outlet 3. The silencer inlet 21 is connected to a valve outlet 1 of a pneumatic brake device (not shown or represented by the valve outlet 1, respectively). However, in other embodiments, the pneumatic brake silencer assembly 10 may comprise the valve outlet 1 to release a pressurized pneumatic flow to the silencer 2 from a pneumatic brake device. The silencer 2 comprises a silencer mesh 2a to reduce the noise being released from the silencer outlet 3, which will be further described with reference to Figs. 4 to 6.

The noise absorber chamber device 4 is arranged downstream of the silencer 2 or the silencer outlet 3, respectively, with respect to the pressurized pneumatic flow passing through the silencer 2 from the silencer inlet 21 to the silencer outlet 3. In other words, the noise absorber chamber device 4 provides an extension of the silencer 2 at the silencer outlet 3. The noise absorber chamber device 4 provides a noise absorber chamber device inlet 41 operationally connected to the silencer outlet 3 and a noise absorber chamber device outlet 42 opposed to the noise absorber chamber device inlet 41 with a noise absorber chamber device lateral wall 4a extending between the noise absorber chamber device inlet 41 and the noise absorber chamber device outlet 42. The noise absorber chamber device lateral wall is shaped as a frustum of a cone with a noise absorber chamber device opening angle α in the direction from the noise absorber chamber device inlet 41 to the noise absorber chamber device outlet 42. The noise absorber chamber device opening angle α angle in the exemplary embodiment is 25°. However, in other embodiments, the noise absorber chamber device 4 may be of a different shape and/or may provide a different noise absorber chamber device opening angle α, e.g. preferably a noise absorber chamber device opening angle α of 0° to 60°.

The noise absorber chamber device inlet 41 provides a noise absorber chamber inlet diameter D as area to allow a pressurized pneumatic flow to the noise absorber chamber formed by the noise absorber chamber device lateral wall between the noise absorber chamber device inlet 41 and the noise absorber chamber device outlet 42. The noise absorber chamber inlet diameter D in the exemplary embodiment is formed as a single opening. However, in other embodiments, the noise absorber chamber inlet diameter D may also be formed by a plurality of openings, for example, in a grid pattern. The noise absorber chamber inlet diameter D in the exemplary embodiment corresponds to the silencer outlet opening diameter at the silencer outlet 3. In the exemplary embodiment, the silencer outlet opening diameter at the silencer outlet 3 and the noise absorber chamber inlet diameter D, respectively, is 1 to 3 times a silencer outlet opening diameter at a silencer outlet of a conventional silencer.

The noise absorber chamber length L of the noise absorber chamber device 4 as the distance between the noise absorber chamber device inlet 41 and the noise absorber chamber device outlet 42 is 1 to 4 times the noise absorber chamber inlet diameter D. Accordingly, the noise absorber chamber length L may be 1 to 12 times a silencer outlet opening diameter at a silencer outlet of a conventional silencer. However, even though a longer noise absorber chamber length L may be more effective in noise reduction, the noise absorber chamber length L may not be more than 1 to 6 times a silencer outlet opening diameter at a silencer outlet of a conventional silencer. Limiting of noise absorber chamber length allows to reduce the space consumption while the effect in noise reduction may be regressively with increasing noise absorber chamber length L.

An inner surface side of the noise absorber chamber device lateral wall 4a facing toward the noise absorber chamber is covered with an absorber layer 5. The absorber layer 5 is made of a noise energy absorbing material, here a fibrous material. The thickness of the absorber layer 5 perpendicular to the inner surface side of the noise absorber chamber device lateral wall 4a in the exemplary embodiment is 5 mm. However, in other embodiments, the thickness may be more or less than 5 mm. For example, the absorbing material may provide a thickness of 0 mm to 50 mm. A thickness of 0 mm represents a noise absorber chamber device lateral wall without an additional absorbing material but only the rigid wall. The absorber layer 5 further comprises optional noise scattering surface features 5a on an inner surface side of the absorber layer 5 facing the noise absorber chamber to allow to further affect surface properties of the absorber layer 5. The noise energy absorbing material, thickness and/or surface properties of the absorber layer 5 may be selected differently with respect to a concrete configuration of the noise absorber chamber device, e.g. with respect to the noise absorber chamber length L, the noise absorber chamber inlet diameter D and/or the noise absorber chamber opening angle α, and/or the noise reduction performance of the upstream silencer 2. Specifically, such selection may be directed to the requirements of environmental impact related to automotive standards for admissible noise emission.

**Figure 2** shows an enlarged view of an absorber layer section according to Fig. 1 as indicated by the circle A. As already addressed with respect to Fig. 1, the absorber layer 5 provides noise scattering surface features 5a. Here, the noise scattering surface features 5a form a surface structure to allow the incident noise waves to be dispersed into several reflected waves with a lower level of noise and/or to be diffused. The absorber layer 5 in the exemplary embodiment therefore comprises a regular pattern of noise scattering surface features 5a. Here, the regular pattern is provided by a defined surface structure of convex surface features as the noise scattering surface features 5a provided in a regular pattern.

**Figure 3** shows a schematic cross-sectional view of a pneumatic brake silencer assembly 10' according to a second exemplary embodiment. The pneumatic brake silencer assembly 10' according to the second exemplary embodiment differs from the pneumatic brake silencer assembly 10 according to the first secondary embodiment by a different design of noise absorber chamber device 4' with respect to the noise absorber chamber device outlet 42'. Other features of the noise absorber chamber device 4' in the second exemplary embodiment are the same as in the first exemplary embodiment but indicated by x', wherein x represents a respective reference number, as belonging to the noise absorber chamber device 4'.

The noise absorber chamber device outlet 42' of the noise absorber chamber device 4' of the pneumatic brake silencer assembly 10' is formed by a plurality of outlet channels 43'.

Accordingly, the noise absorber chamber device outlet 42' is not one large opening but provided by the plurality of outlet channels 43'. According to the noise absorber chamber device outlet 42' being formed by the plurality of outlet channels 43', the inside of the noise absorber chamber device 4' may be at least partially protected from water and dirt. Further, the structure forming the plurality of outlet channels 43' allows noise to be reflected back into the noise absorber chamber device 4' to increase absorption by a noise trap effect.

In the exemplary embodiment, the plurality of outlet channels 43' extends over the entire noise absorber chamber device outlet 42'. In other words, the noise absorber chamber device outlet 42' is not substantially narrowed by the structure providing the plurality of outlet channels 43' but structured or patterned by the plurality of outlet channels 43'. The structure forming the plurality of outlet channels 43' forms a regular pattern of outlet channels 43'. The regular pattern of the outlet channels 43' is a pattern of outlet channels 43' with a hexagonal cross-sectional shape in a plane comprising the plurality of outlet channels 43'.

Further, the outlet channels 43' are extending tapered from an outlet channel opening facing the noise absorber chamber to an outlet channel opening facing away from the noise absorber chamber. A pneumatic flow passing the outlet channels 43' may thereby be further reflected to keep noise at least partially within the noise absorber chamber device and/or to further absorb some noise.

**Figure 4** shows a schematic cross-sectional view of a first exemplary silencer 2 according to the exemplary embodiments of the pneumatic brake silencer assembly 10, 10' as per Figs. 1 to 3. The silencer 2 comprises a basket 2c, which is formed in a hollow cylindrical shape, wherein one open end of the hollow cylinder forms the silencer inlet 21 and the opposed open end thereof forms the silencer outlet 3. However, in other embodiments, the basket 2c may be of a different hollow shape to form a flow channel for a pressurized pneumatic flow passing the silencer 2 from the silencer inlet 21 to the silencer outlet 3.

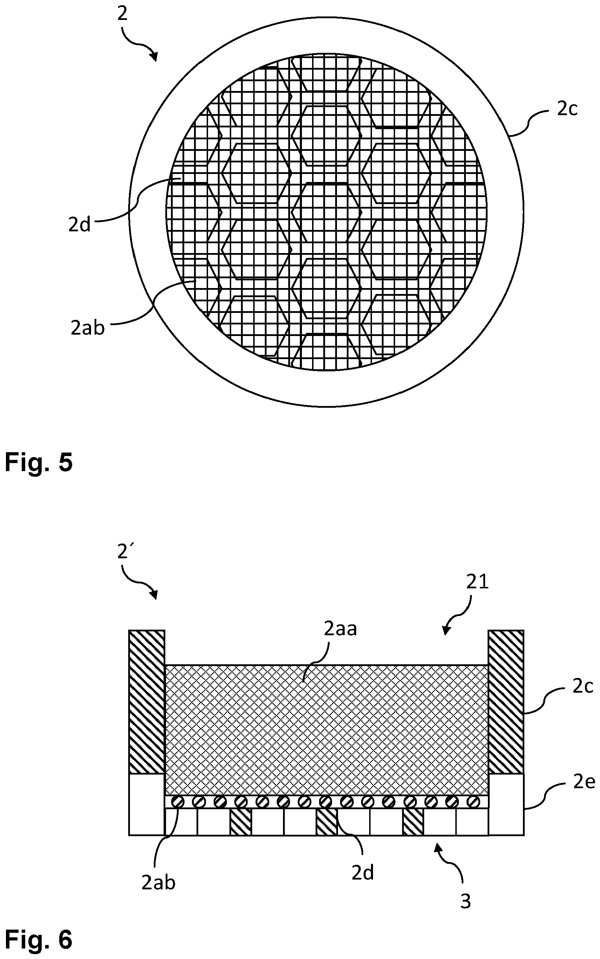

The silencer 2 further comprises an outlet structure 2d at the silencer outlet 3. In the exemplary embodiment, the outlet structure 2d is integrally formed with the basket 2c. The outlet structure 2d forms outlet openings, which will be further described with respect to Fig. 5.

Within the basket 2, a wire mesh 2ab is positioned on the outlet structure 2d to be held thereon. The wire mesh 2ab is provided by one layer of a grid structure formed by the wires of the wire mesh 2ab. The wires of the wire mesh 2ab are of substantially circular cross-sectional shape.

Further, a knitted mesh 2aa is arranged within the basket 2c such that the wire mesh 2ab is positioned between the knitted mesh 2aa and the outlet structure 2d. The pore size of the wire mesh 2ab is comparable to the pore size of the knitted mesh 2aa. Accordingly, the wire mesh 2ab does not provide a pore size prone to clogging or freezing but decreases the scale of turbulences and therefore the noise level due to its more homogeneous structure with respect to the knitted mesh 2aa.

**Figure 5** shows a schematic top view of the silencer 2 according to Fig. 4 without the knitted mesh 2aa shown. The view is from the silencer inlet 21 in the direction of the silencer outlet 3. Accordingly, the knitted mesh 2aa has been omitted in Fig. 5 to allow the representation of the wire mesh 2ab and the outlet structure 2d. In the exemplary embodiment, the wire mesh 2ab is formed as a regular rectangular pattern formed by woven metal wires, and the outlet structure 2d is formed as a regular hexagonal pattern. The openings of the outlet structure 2d are greater than the pore size of the wire mesh 2ab formed by the regular rectangular pattern. Here, the outlet structure 2d mainly serves as a holding structure for the wire mesh 2ab.

**Figure 6** shows a schematic cross-sectional view of a second exemplary silencer 2' applicable to the exemplary embodiments of the pneumatic brake silencer assembly 10, 10' as per Figs. 1 to 3. The silencer 2' according to the second exemplary embodiment differs from the silencer 2 of the first exemplary embodiment in that the basket 2c of the silencer 2' forms lateral opening 2e to allow a pressurized pneumatic flow to also be released to a lateral side of the basket 2c. The lateral side of the basket 2c refers to a side of the basket 2c extending in the direction of the cylindrical axis. Accordingly, the lateral opening 2e refers to an opening cross-section of the lateral opening 2e extending in the direction of the cylindrical axis. The lateral openings 2e thereby form a radial channel with respect to the cylinder axis to allow pressurized pneumatic air to be also released to a lateral side of the basket 2c.

The lateral openings 2e are formed at the side of the silencer outlet 22 starting from a portion of the basket 2c covered by the knitted mesh 2aa to further extend in the direction of the silencer outlet 3. However, in other embodiments, the lateral openings 2e may only start from a portion of the basket 2c covered by the wire mesh 2ab to ensure that a pressurized pneumatic flow has at least partially passed the wire mesh 2ab before being released through the lateral openings 2e.

The invention has been described with respect to an exemplary embodiments. However, the invention is not limited to the exemplary embodiments. In particular, the noise absorber chamber device may be used with any other silencer than the silencer described with respect to the exemplary embodiments.

### LIST OF REFERENCE SIGNS

- 1: valve outlet
- 2, 2': silencer
- 2a: silencer mesh
- 2aa: knitted mesh
- 2ab: wire mesh
- 2c: basket
- 2d: outlet structure
- 2e: lateral opening
- 3: silencer outlet
- 4, 4': noise absorber chamber device
- 4a, 4a': noise absorber chamber device lateral wall
- 5: absorber layer
- 5a: noise scattering surface feature
- 10, 10': pneumatic brake silencer assembly
- 21: silencer inlet
- 41, 41': noise absorber chamber device inlet
- 42, 42': noise absorber chamber device outlet
- 43': outlet channel
- D: noise absorber chamber inlet diameter
- L: noise absorber chamber length
- α: noise absorber chamber opening angle

## Claims

1. Noise absorber chamber device (4, 4') for a pneumatic brake silencer assembly (10, 10') for a vehicle, comprising:
a noise absorber chamber device inlet (41, 41') configured to receive a pressurized pneumatic flow;
a noise absorber chamber device outlet (42, 42') configured to release the pneumatic flow after passing the noise absorber chamber device (4, 4') from the noise absorber chamber device inlet (41, 41') to the noise absorber chamber device outlet (42, 42'); and
a noise absorber chamber device lateral wall (4a, 4a') extending from the noise absorber chamber device inlet (41, 41') to the noise absorber chamber device outlet (42, 42') to form a noise absorption chamber between the noise absorber chamber device inlet (41, 41') and the noise absorber chamber device outlet (42, 42').

2. Noise absorber chamber device (4, 4') according to claim 1, wherein an inner surface of the noise absorber chamber device lateral wall (4a, 4a') at least partially extends from the noise absorber chamber device inlet (41, 41') to the noise absorber chamber device outlet (42, 42') with an opening angle (α) of 0° to 60°, preferably 20° to 40°, more preferably substantially 25°.

3. Noise absorber chamber device (4, 4') according to claim 1 or 2, wherein a noise absorber chamber inlet diameter (D) of the noise absorber chamber device inlet (41, 41') is between 40 mm and 250 mm, preferably between 50 mm and 200 mm, more preferably about 70 mm.

4. Noise absorber chamber device (4, 4') according to any one of the preceding claims, wherein the length (L) of the noise absorber chamber device lateral wall (4a, 4a') is substantially between one to four times the noise absorber chamber inlet diameter (D) of the noise absorber chamber device inlet (41, 41 '), preferably the noise absorber chamber inlet diameter (D) of the noise absorber chamber device inlet (41, 41') according to claim 3, more preferably between 50 mm and 400 mm.

5. Noise absorber chamber device (4, 4') according to any one of the preceding claims, wherein an inner surface of the noise absorber chamber device lateral wall (4a, 4a') is at least partially provided by a noise absorbing material (5), preferably a fibrous or foam material.

6. Noise absorber chamber device (4, 4') according to claim 5, wherein the thickness of the noise absorbing material (5) is at least one tenth of the characteristic noise wavelength.

7. Noise absorber chamber device (4, 4') according to claim 5 or 6, wherein the thickness of the noise absorbing material (5) is between 1 mm and 25 mm, preferably between 3 mm and 20 mm.

8. Noise absorber chamber device (4, 4') according to any one of the preceding claims, wherein the inner surface of the noise absorber chamber device lateral wall (4a, 4a') at least partially comprises noise scattering surface features (5a).

9. Noise absorber chamber device (4, 4') according to any one of the preceding claims, wherein the noise absorber chamber device lateral wall (4a, 4a') is solid with a high reflection ratio and provides high rigidity.

10. Noise absorber chamber device (4') according to any one of the preceding claims, wherein the noise absorber chamber device outlet (42, 42') is formed by a plurality of outlet channels (43').

11. Noise absorber chamber device (4') according to claim 10, wherein at least some of the outlet channels (43') are extending in a hexagonal shape.

12. Noise absorber chamber device (4') according to claim 10 or 11, wherein at least some of the outlet channels (43') are extending tapered from an outlet channel opening facing the noise absorber chamber to an outlet channel opening facing away from the noise absorber chamber.

13. Pneumatic brake silencer assembly (10, 10') for a vehicle, comprising:
at least one silencer (2) with a silencer outlet (3) configured to release a pressurized pneumatic flow; and
at least one noise absorber chamber device (4, 4') according to any one of the claims 1 to 12, wherein
the silencer outlet (3) is operatively connected to the noise absorber chamber device inlet (41, 41') of the noise absorber chamber device (4, 4').

14. Pneumatic brake silencer assembly (10, 10') according to claim 13, wherein the at least one noise absorber chamber device (4, 4') is a separate part to be assembled directly or indirectly to the silencer outlet (3) or is integrally formed with the at least one silencer (2).

15. Vehicle comprising at least one noise absorber chamber device (4, 4') according to any one of the claims 1 to 12 and/or pneumatic brake silencer assembly (10, 10') according to claim 13 or 14, wherein the vehicle is a commercial vehicle and/or an electrically powered or hybrid vehicle.
